(19) **Europäisches Patentamt**
**European Patent Office**
**Office européen des brevets**

(11) **EP 1 256 731 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **02008892.8**

(22) Anmeldetag: **20.04.2002**

(51) Int Cl.:
*F16C 13/02* (2006.01)   *D21G 1/00* (2006.01)
*F16C 13/00* (2006.01)   *D21G 1/02* (2006.01)
*F16F 15/02* (2006.01)

(54) **Biegeausgleichswalze**

Controlled deflection roll

Rouleau à compensation de flèche

(84) Benannte Vertragsstaaten:
**DE FI FR GB SE**

(30) Priorität: **10.05.2001 DE 10122648**

(43) Veröffentlichungstag der Anmeldung:
**13.11.2002 Patentblatt 2002/46**

(73) Patentinhaber: **Voith Patent GmbH**
**89522 Heidenheim (DE)**

(72) Erfinder: **van Haag, Rolf, Dr.-Ing.**
**47647 Kerken (DE)**

(56) Entgegenhaltungen:
**WO-A-00/09805      CH-A5- 614 502**
**CH-A5- 673 415      CH-A5- 684 526**
**DE-A1- 19 833 308      DE-C1- 3 909 911**
**DE-U1- 29 509 545**

EP 1 256 731 B1

**Beschreibung**

Die Erfindung betrifft eine Biegeausgleichswalze mit einem Walzenmantel, der im Bereich seiner axialen Enden auf Wälzlagern gelagert ist und parallel zu einer Wirkebene hydraulisch unterstützt ist, wobei neben jedem Wälzlager eine senkrecht zur Wirkebene wirkende Dämpfungseinrichtung angeordnet ist.

Eine derartige Biegeausgleichswalze ist aus CH 614 502 A5 bekannt. Die Biegeausgleichswalze weist einen Walzenmantel auf, der an seinen axialen Enden mit Hilfe von Wälzlagern an einem feststehenden Träger gelagert ist. Am feststehenden Träger sind innerhalb des Walzenmantels Anschläge vorgesehen, die senkrecht zur Wirkebene mit einem Spiel gegenüber der Innenfläche des Walzenmantels angeordnet sind. Die Anschläge können als hydraulisch verstellbare Stützelemente ausgebildet sein, so dass die Durchbiegung der Walze senkrecht zur Wirkebene einstellbar ist. Die Anschläge dienen also zur Beeinflussung einer seitlichen Deformation des Walzenmantels.

Eine weitere Biegeausgleichswalze ist aus DE 198 54 339 A1 bekannt. Walzen dieser Art werden bevorzugterweise als Endwalzen in einem Kalander eingesetzt, um eine Papierbahn oder eine andere Materialbahn zu satinieren, d.h. in den Nips des Kalanders mit erhöhtem Druck, gegebenenfalls auch mit erhöhter Temperatur, zu beaufschlagen. Die bekannte Walze weist neben den Wälzlagern ein hydrostatisches Stützelement auf, das dafür gedacht ist, eine Mindestlast auf den Wälzlagern zu garantieren. Damit soll erreicht werden, dass eine für die ordnungsgemäße rollende Mitnahme der Wälzkörper des Wälzlagers ausreichende Zusatzkraft ausübbar ist.

DE 198 33 308 A1 zeigt eine weitere Biegeausgleichswalze, mit hydrostatischen Stützelementen, die um 90° versetzt zur Wirkebene arbeiten. Diese Stützelemente dienen zur Positionierung des Mantels. Sie sind auf einem Träger gelagert, der einer Bewegung der Stützelemente in der Wirkebene folgt. Hierzu besteht eine mechanische Verbindung zwischen dem Träger der Quer-Stützelemente und den Stützelementen in Wirkrichtung.

Eine weitere Biegeausgleichswalze ist aus EP 0 764 790 B1 bekannt. Hier bringt man die für die Abstützung notwendigen Kräfte dadurch auf, dass man zwei Gegenstützreihen verwendet, deren Winkel zueinander kleiner als 180° ist.

Aus CH 684 526 A5 ist eine Rotationsdruckmaschine bekannt, bei der Deformationen und Verlagerungen eines Walzenmantels quer zur Wirkebene dadurch vermieden werden, dass zusätzliche Stützelemente zur Ausübung einer Rückstellkraft auf den Walzenmantel senkrecht zur Wirkebene vorgesehen sind. Die Stützelemente können dabei als hydrostatische oder hydrodynamische Lager ausgebildet sein, wobei dadurch eine Dämpfung des Walzenmantels erzielt wird. Der Walzenmantel ist in seinen Endbereichen mit Hilfe von Pendellagern auf einem Träger gelagert. Die Querstützelemente werden dabei so geregelt, dass die Lagerkraft gegen Null geht.

EP 0 772 715 B1 beschreibt die Verwendung einer Walze mit "Spreizelementen" am Walzenende, d.h. hydraulische Stützelemente, die auf den Innenumfang des Endes der Hohlwalze quer zu der Wirkebene wirkende Kräfte ausüben und das Ende der Hohlwalze gewissermaßen zur Wirkebene auseinanderziehen, wodurch die Hohlwalze im Walzenspalt am Ende von dem Walzenspalt fortgezogen wird.

Gemäß CH 673 415 A5 können dabei die Spreizelemente als hydrostatische Stützelemente ausgebildet sein.

Aus DE 295 09 545 U1 ist eine Walze mit einem Schwingungsdämpfer bekannt, wobei der Schwingungsdämpfer Vibrationen eines Walzenmantels verringern soll. Die Walze weist dabei Stützelemente auf, die gegen die Innenfläche des Walzenmantels andrücken, und so eine kontrollierte Durchbiegung des Walzenmantels ermöglichen. Die Stützelemente wirken dabei in Wirkrichtung. Dabei werden die Stützelemente über einen zentral angeordneten Zuführkanal mit Druckflüssigkeit versorgt, wobei zwischen dem Zuführkanal und den Stützelementen Drosselkanäle angeordnet sind. Die Dämpfungswirkung lässt sich dabei über die Bemessung der Drosselkanäle beeinflussen.

Wie eingangs erwähnt, werden derartige Biegeausgleichswalzen bevorzugt in Kalandern zur Behandlung von Papierbahnen verwendet. Die Arbeitsgeschwindigkeit derartiger Kalander wurde in den letzten Jahren kontinuierlich gesteigert. Mit der Steigerung der Arbeitsgeschwindigkeit geht aber auch eine Erhöhung der Drehzahlen des Walzenmantels einher. Dies führt dazu, dass der Walzenmantel in kritischer Drehzahlbereiche kommt, bei denen die Gefahr einer Resonanzerscheinung besteht. Da man derartige Resonanzen vorher berechnen kann, kann man in den meisten Fällen auch Abhilfe schaffen.

Bei einigen Walzen hat sich nun herausgestellt, dass sich unerwünschte Schwingungen bei Drehzahlen ergeben, bei denen sie eigentlich nicht zu erwarten gewesen wären. Insbesondere hat man eine Eigenfrequenz des Walzenmantels weit unterhalb seiner ersten Biegeeigenfrequenz beobachtet. Möglicherweise ist eine derartige Resonanz-Schwingung auch eine der Ursachen für die sogenannte Barringbildung, bei der beim Satinieren Querstreifen auf der Papierbahn entstehen, die bei Sichtbarwerden zu Ausschuss der Papierbahn führen.

Der Erfindung liegt die Aufgabe zugrunde, das Betriebsverhalten der Walze zu verbessern.

Diese Aufgabe wird bei einer Biegeausgleichswalze der eingangs genannten Art dadurch gelöst, dass die Dämpfungseinrichtung eine Grundkraft auf den Walzenmantel ausübt, die relativ zur Wirkebene derart asymmetrisch ausgebildet ist, dass eine einseitige Belastung der Wälzlager erfolgt.

Hierbei geht man von folgenden Überlegungen aus: Man vermutet, dass es sich bei der genannten niederfrequenten Schwingung um eine Starrkörperschwingung des Walzenmantels auf dem Federsystem der Wälzlager handelt.

Die Wälzlager haben in Wirkrichtung, d.h. in Belastungsrichtung, eine relativ hohe Steifigkeit. Rechtwinklig zur Belastungsrichtung, d.h. bei einem vertikal stehenden Walzenstapel eines Kalanders horizontal, ist die Lagersteifigkeit durch das in Wälzlagern normalerweise vorhandene Lagerspiel deutlich geringer. Wenn man nun eine senkrecht zur Wirkebene wirkende Dämpfungseinrichtung unmittelbar neben jedem Wälzlager anordnet, dann wird die Schwingungsgeschwindigkeit des Walzenmantels herabgesetzt. Dies hat zur Folge, dass auch die Schwingungsamplitude drastisch vermindert werden kann. Eine derartige Dämpfungseinrichtung führt daher insbesondere bei Frequenzen unterhalb der Biegeeigenfrequenz des Walzenmantels zu einer wesentlichen Verbesserung des Betriebsverhaltens.

Die Dämpfungseinrichtung übt eine Grundkraft auf den Walzenmantel aus. Die Dämpfungseinrichtung dient also nicht nur dazu, eine Bewegung des Walzenmantels senkrecht zur Wirkebene zu dämpfen, sie dient auch dazu, den Walzenmantel sozusagen vorzuspannen. Dadurch ist es möglich, das ansonsten frei auf der Buchse drehende Wälzlager mit einer Grundlast zu versehen, welche die Lagerkäfigführung entscheidend verbessert.

Hierbei ist diese Grundlast relativ zur Wirkebene asymmetrisch ausgebildet. Durch die asymmetrische Ausbildung der Grundlast erfolgt auch eine entsprechend einseitige Belastung der Wälzlager. Probleme mit drehenden Lageraußenringen, Anschmierungen und abweichenden Käfigfrequenzen werden durch die einseitige oder asymmetrische Wirkung der Dämpfungseinrichtung wirksam verringert.

Vorzugsweise ist die Dämpfungseinrichtung auf der axial inneren Seite des Wälzlagers angeordnet. Auf der axial inneren Seite des Wälzlagers steht in der Regel mehr Bauraum zur Verfügung, so daß der Einbau der Dämpfungseinrichtung konstruktiv keine größeren Komplikationen mit sich bringt. Vor allem aber greift die Dämpfungseinrichtung an einem Bereich des Walzenmantels an, der eine größere axiale Länge aufweist als der Bereich axial außerhalb des Wälzlagers. Die Dämpfungseigenschaften werden damit verbessert.

Vorzugsweise ist die Dämpfungseinrichtung als hydraulische Stützquellenanordnung ausgebildet. Diese Ausgestaltung hat mehrere Vorteile. Zum einen ist es möglich, die Dämpfungseinrichtung nahezu reibungsfrei auf den Walzenmantel wirken zu lassen. Zwischen einer Stützquelle und dem Walzenmantel kann sich ein Flüssigkeitsfilm ausbilden, wie dies von hydrostatischen und hydrodynamischen Stützquellen bekannt ist, die in Wirkrichtung der Walze wirken. Darüber hinaus haben insbesondere hydrostatische Stützquellen bereits eine gewisse innere Dämpfung durch eine Drossel, durch die die Lagertaschen mit Öl versorgt werden.

Hierbei ist besonders bevorzugt, daß der hydraulischen Stützquellenanordnung eine Drosselanordnung vorgeschaltet ist. Die Drosselanordnung befindet sich also im Versorgungspfad der Stützquellen. Durch diese Vordrosselung wird ein verhältnismäßig kleines Ölvolumen zwischen der Stützquelle und dem Joch, in dem die Stützquelle angeordnet ist, eingespannt. Bei einer Druckpulsation muß das durch die Stützquellenbewegung verdrängte Ölvolumen über die Drosselstellen zu- und abfließen. Durch die Reibungsverluste an der Drossel wird Schwingungsenergie vernichtet. Auf diese Weise ist eine hohe Dämpfung und eine Steigerung der Lagersteifigkeit zu erzielen.

Vorzugsweise weist die Stützquellenanordnung eine Versorgungseinrichtung mit einem Druckspeicher auf. Der Druckspeicher hat den Vorteil, daß der Druck bei der Schwingungsbewegung des Walzenmantels vor der Drosselanordnung auf einem konstanten Wert gehalten werden kann.

Vorzugsweise erzeugt die Stützquellenanordnung zwei in entgegengesetzte Richtungen wirkende Kraftkomponenten. Dies hat den Vorteil, daß Schwingungsbewegungen des Walzenmantels in mehrere Richtungen zuverlässig gedämpft werden. Der Walzenmantel wird dadurch auch in einer engeren Anlage an den Stützelementen gehalten.

Vorzugsweise weist die Stützquellenanordnung Stützquellen auf, deren statische Spalthöhe größer als 25 μm ist. Diese Spalthöhe läßt sich durch die Wahl der einzelnen Drosselstellen in der Versorgung der Stützquelle bzw. in der Versorgung der Lagertaschen an der Stützquelle einstellen. Mit 25 μm hat man eine ausreichende Reserve, um bei einer Schwingungsbewegung des Walzenmantels ein Aufschlagen des Walzenmantels auf der Lagerfläche der Stützstelle zu verhindern.

Bevorzugterweise weist die Stützquellenanordnung mehr als zwei Stützquellen pro Lager auf. Beispielsweise können auf jeder Lagerseite zwei Stützquellen axial oder in Umlaufrichtung des Walzenmantels nebeneinander angeordnet sein. Bei mehreren Stützquellen erhält man die gleiche Dämpferleistung bei einer höheren Sicherheit gegen ein ungewolltes Aufschlagen des Mantels auf der Lagerfläche der Stützquelle.

Die Erfindung wird im folgenden anhand eines bevorzugten Ausführungsbeispiels in Verbindung mit der Zeichnung beschrieben. Darin zeigen:

Fig. 1     einen schematischen Längsschnitt durch ein Ende einer Walze und

Fig. 2     einen Schnitt A-A nach Fig. 1

Eine Wälze 1, die als Durchbiegeausgleichswalze ausgebildet ist, weist einen Walzenmantel 2 auf, der mit einem elastischen Belag 3 versehen sein kann, wenn die Walze 1 als "weiche" Walze in einem Kalander eingesetzt werden soll. Der Belag 3 kann jedoch auch weggelassen werden, insbesondere dann, wenn die Walze 1 in einem Glättwerk oder als "harte" Walze in einem Kalander verwendet werden soll.

Der Walzenmantel 2 ist über Wälzlager 4 auf einem Joch 5 drehbar gelagert. Gegebenenfalls können die Wälzlager 4 auf einem Lagerträger 6 angeordnet sein, der gegenüber dem Joch 5 verlagerbar ist. In diesem Fall handelt es sich um eine Walze mit Mantelhub. Auf der axialen Außenseite des Wälzlagers ist eine Dichtungsanordnung 7 vorgesehen.

Im Betrieb arbeitet die Walze 1 mit einer schematisch dargestellten Gegenwalze 8 zusammen. Sie bildet mit der Gegenwalze 8 einen Nip 9, durch den eine Materialbahn, beispielsweise eine Papierbahn, geführt werden kann, um dort mit erhöhtem Druck beaufschlagt zu werden.

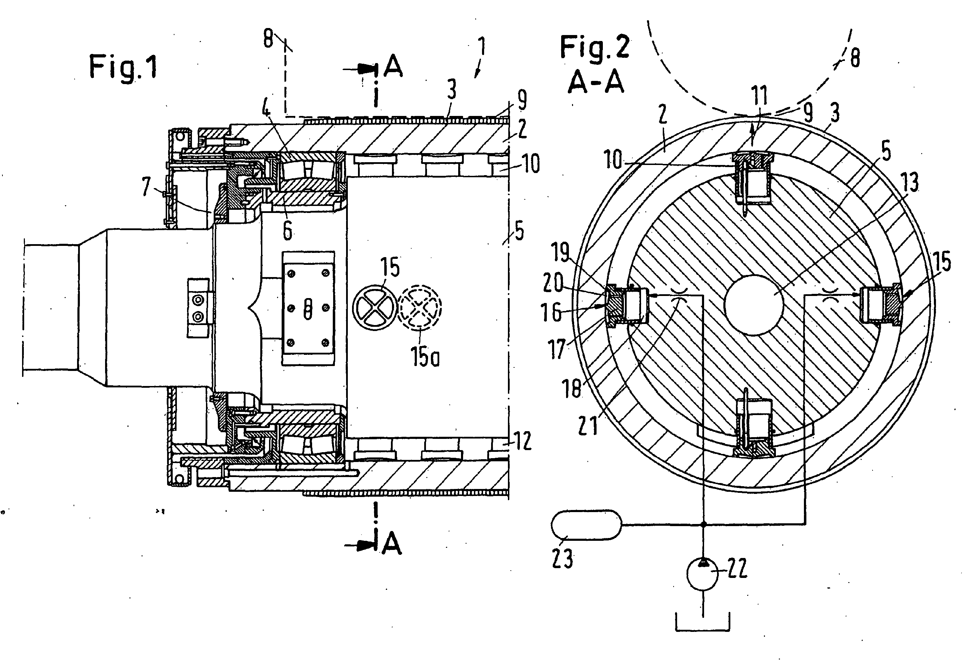

Zwischen dem Joch 5 und dem Walzenmantel 2 sind eine Reihe von hydraulischen Stützelementen 10 angeordnet, die nach dem hydrostatischen Prinzip arbeiten. Die Stützelemente 10 wirken in Richtung der Gegenwalze 8. Diese Richtung wird im folgenden als "Wirkrichtung" bezeichnet. Sie ist in Fig. 2 mit einem Pfeil 11 dargestellt.

Auf der gegenüberliegenden Seite sind weitere Stützelemente 12 zwischen dem Joch 5 und dem Walzenmantel 2 angeordnet 2, die entgegen der Wirkrichtung 11 wirken, beispielsweise um gezielt in bestimmten Bereichen eine Druckentlastung zu bewirken. Ein derartiger Walzenaufbau ist allgemein bekannt. Aus diesem Grund wird auch auf eine nähere Darstellung der Versorgung der Stützelemente 10, 12 verzichtet. Diese Versorgung wird schematisch durch einen Versorgungskanal 13 sichergestellt, der das Joch 5 in Axialrichtung durchsetzt. Gegebenenfalls können auch alle Stützelemente 10, 12 einzeln oder in Gruppen angesteuert werden, um ein bestimmtes Biegeprofil des Walzenmantels 2 zu erzeugen.

Zusätzlich sind zwischen dem Walzenmantel 2 und dem Joch 5 Dämpfungselemente 15, 16 angeordnet. Die Dämpfungselemente 15, 16 wirken senkrecht zur Wirkrichtung 11, bei einem vertikal stehenden Walzenstapel also horizontal. Die Dämpfungselemente 15, 16 sind als hydrostatische Stützelemente ausgebildet, d. h. sie weisen einen Stützstempel 17 auf, der in einer Zylinderbohrung 18 im Joch eingesetzt ist. Der in der Zylinderbohrung 18 gebildete Druckraum ist über Drosseln 19 mit Drucktaschen 20 verbunden. Die Zylinderbohrung 18 ist über eine Drossel 21 mit einer Druckquelle 22 verbunden, die hier als Pumpe dargestellt ist. Zwischen der Druckquelle 22 und der Drossel 21 zweigt eine Leitung zu einem Druckspeicher 23 ab.

Eine entsprechende Anordnung ist auch für das Dämpfungselement 15 vorgesehen. Das Dämpfungselement 15 und das Dämpfungselement 16 sind symmetrisch zueinander angeordnet und werden auch, nicht erfindungsgemäß, symmetrisch zueinander versorgt.

Das Dämpfungselement 15 und das Dämpfungselement 16 erzeugen also permanent eine Grundkraft auf den Walzenmantel. Wenn man in einer alternativen, erfindungsgemäßen Ausgestaltung diese Grundkraft asymmetrisch zur Wirkebene 11 ausbildet, d.h. die Kraft von einem Dämpfungselement 15 größer macht als die vom anderen Dämpfungselement 16 erzeugte Kraft, dann erhält man eine noch weitergehende Verbesserung. Das bisher lastfrei auf der Buchse 6 laufende Wälzlager 4 wird erfindungsgemäß mit einer Grundlast versehen, die die Lagerkäfigführung entscheidend verbessert. Der Problemkreis von drehenden Lageraußenringen, Anschmierungen und abweichenden Käfigfrequenzen wird dadurch ganz erheblich entschärft.

Wie aus Fig. 1 zu erkennen ist, kann in Axialrichtung neben dem Dämpfungselement 15 (gleiches gilt für das Dämpfungselement 16) ein weiteres Dämpfungselement 15a angeordnet sein. Man kann die beiden Dämpfungselemente 15, 15a auch in Umlaufrichtung des Walzenmantels nebeneinander anordnen (nicht näher dargestellt).

Die Dämpfungselemente haben beispielsweise einen Durchmesser (Durchmesser der Zylinderbohrung 18) von 100 mm. Wenn man davon ausgeht, daß am anderen Ende eine entsprechende Dämpfungsanordnung vorgesehen ist, stehen also insgesamt vier Stützquellen zur horizontalen Dämpfung zur Verfügung. Die Drossel 21 ist in einem Ausführungsbeispiel als Kapillare mit einem Durchmesser von 2 mm und einer Länge von 25 mm ausgebildet.

Die Schwingung des Walzenmantels richtet sich nach folgender Differenzialgleichung:

$$\text{m} \cdot \ddot{\text{X}} + \text{b} \cdot \dot{\text{X}} + \text{Cges} \cdot \text{X} = \text{U} \cdot \text{r} \cdot \omega^2 \cdot \sin(\omega t) \qquad (1)$$

Für ein Öl der Klasse ISO VG 68 ergibt sich bei 40°C eine Dämpfungskonstante von b = 209260 Ns/m für eine Stützquelle. Die Mantelmasse m wird im folgenden Fall mit 15000 kg angenommen.

Unter Ansatz der folgenden, allgemein gültigen schwingungstechnischen Zusammenhänge folgt damit ein Dämpfungsfaktor (Abklingkoeffizient) $\delta$

$$\delta = \text{b}/(2\text{m}) = 4 * 209260 \text{ Ns/m}/(2 * 15000 \text{ kg}) = 27{,}9 \text{ 1/s} \qquad (2)$$

Und damit folgt ein Dämpfungsgrad D zu

$$D = \delta/\omega o = 27,9/62,015 = 0,45 \quad (3)$$

Unter Anwendung der Gleichung 1 folgt (mit U = 4,9 kg und r = 0,4 m) mit diesem relativ hohen Dämpfungsgrad eine Schwingwegamplitude von 0,1 mm und damit eine effektive Schwinggeschwindigkeit des Walzenmantels von 4,27 mm/s.

Damit läßt sich beim Betrieb in der Resonanzstelle die Schwinggeschwindigkeit durch vier dämpfende Stützquellen von 25 mm/s auf 4,27 mm/s reduzieren. Die Druckamplitude unter den Stützquellen der Dämpfungselemente 15, 16 beträgt dabei etwa 1,63 bar. Der Taschendruck schwankt mit einer Amplitude von 1,3 bar und die Spalthöhe schwankt mit einer Amplitude von 9,5 $\mu$m. Die Dämpfungselemente 15,16 sind im vorliegenden Fall so ausgelegt, daß sie eine statische Spalthöhe von 50 $\mu$m aufweisen. Auch bei einer etwas kleineren Spalthöhe wäre diese Schwingungsamplitude wohl noch zulässig.

Die gleiche Dämpfung läßt sich bei geringeren Spalthöhenamplituden allerdings durch größere oder durch mehrere Stützquellen je Walzenseite erzielen.

Verwendet man beispielsweise 8 Dämpfungselemente mit gleichem Durchmesser, also 4 Dämpfungselemente je Walzenende, dann kann man den Durchmesser der Drossel 21 auf 2,4 mm bei gleicher Länge vergrößern. In diesem Fall stellt sich die dynamische Dämpfungskonstante b zu 103.138 Ns/m ein. Die Druck- und Ölspaltänderungen sind jedoch in diesem Fall deutlich geringer. Die Kolbendurckamplitude beträgt nur 0,83 bar, die Taschendruckamplitude nur 0,68 bar und die Spaltänderungsamplitude nur 4,8 $\mu$m. Man erkennt hieraus, daß durch mehrere Dämpfungselemente 15, 16 die gleiche Dämpferleistung bei höherer Sicherheit gegen ein ungewolltes Aufschlagen der Stützquelle auf den Mantel zu erzielen ist.

Zur Entscheidung, wann seitliche Dämpfungselemente 15, 16 zur Dämpfung der möglichen Bewegung im Wälzlagerspiel eingesetzt werden sollen, kann man die zu erwartende Eigenfrequenz über eine empirisch zu ermittelnde Lagersteifigkeit abschätzen. Hierzu kann man beispielsweise von einer Gesamtsteifigkeit Cges = 60 N/$\mu$m ausgehen, d. h. $60 \cdot 10^5$ N/m. Die Gesamtsteifigkeit wird wesentlich durch die das Lagerspiel vermindernde Quersteifigkeit des Wälzlagers bedingt, d. h. Cges wird noch ohne Dämpfungselemente 15, 16 bestimmt.

Die kritische Drehzahl nk ergibt sich somit zu

$$nk = 1 / (2\pi) \cdot \sqrt{Cges / m}$$

mit m als Mantelmasse. Die seitlichen Dämpfungselemente sind also dann einzusetzen, wenn die maximale Betriebsdrehzahl größer als 0,9·nk ist. Durch Hinzufügen der Dämpfungselemente 15, 16 läßt sich eine erhebliche Steigerung der Quersteifigkeit im Bereich der Wälzlager erzielen.

**Patentansprüche**

1. Biegeausgleichswalze mit einem Walzenmantel, der im Bereich seiner axialen Enden auf Wälzlagern gelagert ist und parallel zu einer Wirkebene hydraulisch unterstützt ist, wobei neben jedem Wälzlager (4) eine senkrecht zur Wirkebene (11) wirkende Dämpfungseinrichtung (15, 16) angeordnet ist, **dadurch gekennzeichnet, dass** die Dämpfungseinrichtung (15, 16) eine Grundkraft auf den Walzenmantel (2) ausübt, die relativ zur Wirkebene derart asymmetrisch ausgebildet ist, dass eine einseitige Belastung der Wälzlager erfolgt.

2. Biegeausgleichswalze nach Anspruch 1, **dadurch gekennzeichnet, dass** die Dämpfungseinrichtung (15) auf der axial inneren Seite des Wälzlagers (4) angeordnet ist.

3. Biegeausgleichswalze nach Anspruch 1 oder 2, **dadurch gekennzeichnet, dass** die Dämpfungseinrichtung als hydraulische Stützquellenanordnung (15, 16) ausgebildet ist.

4. Biegeausgleichswalze nach Anspruch 3, **dadurch gekennzeichnet, dass** der hydraulischen Stützquellenanordnung (15, 16) eine Drosselanordnung (21) vorgeschaltet ist.

5. Biegeausgleichswalze nach Anspruch 3 oder 4, **dadurch gekennzeichnet, dass** die Stützquellenanordnung (15, 16) eine Versorgungseinrichtung (22, 23) mit einem Druckspeicher (23) aufweist.

**6.** Biegeausgleichswalze nach einem der Ansprüche 3 bis 5, **dadurch gekennzeichnet, dass** die Stützquellenanordnung (15, 16) zwei in entgegengesetzte Richtungen wirkende Kraftkomponenten erzeugt.

**7.** Biegeausgleichswalze nach einem der Ansprüche 3 bis 6, **dadurch gekennzeichnet, dass** die Stützquellenanordnung (15, 16) Stützquellen aufweist, deren statische Spalthöhe größer als 25 $\mu$m ist.

**8.** Biegeausgleichswalze nach einem der Ansprüche 3 bis 7, **dadurch gekennzeichnet, dass** die Stützquellenanordnung (15, 16) mehr als zwei Stützquellen (15, 15a) pro Lager (4) aufweist.

**9.** Biegeausgleichswalze nach einem der Ansprüche 1 bis 8, **dadurch gekennzeichnet, dass** die Betriebsdrehzahl größer als 0, 9·nk ist, wobei

$$\mathtt{nk \;=\; 1 \;/\; (2\pi) \;\cdot\; \sqrt{Cges \;/\; m} \;.}$$

## Claims

**1.** Controlled deflection roll having a roll shell which is mounted on rolling contact bearings in the region of its axial ends and is supported hydraulically parallel to a plane of action, a damping device (15, 16) acting at right angles to the plane of action (11) being arranged beside each rolling contact bearing (4), **characterized in that** the damping device (15, 16) exerts a basic force on the roll shell (2) which is designed asymmetrically with respect to the plane of action, in such a way that the rolling contact bearings are loaded on one side.

**2.** Controlled deflection roll according to Claim 1, **characterized in that** the damping device (15) is arranged on the axially inner side of the rolling contact bearing (4).

**3.** Controlled deflection roll according to Claim 1 or 2, **characterized in that** the damping device is formed as a hydraulic support source arrangement (15, 16).

**4.** Controlled deflection roll according to Claim 3, **characterized in that** a throttling arrangement (21) is connected upstream of the hydraulic support source arrangement (15, 16).

**5.** Controlled deflection roll according to Claim 3 or 4, **characterized in that** the support source arrangement (15, 16) has a supply device (22, 23) with a pressure reservoir (23).

**6.** Controlled deflection roll according to one of Claims 3 to 5, **characterized in that** the support source arrangement (15, 16) produces two force components acting in opposite directions.

**7.** Controlled deflection roll according to one of Claims 3 to 6, **characterized in that** the support source arrangement (15, 16) has support sources of which the static gap height is greater than 25 $\mu$m.

**8.** Controlled deflection roll according to one of Claims 3 to 7, **characterized in that** the support source arrangement (15, 16) has more than two support sources (15, 15a) per bearing (4).

**9.** Controlled deflection roll according to one of Claims 1 to 8, **characterized in that** the operating rotational speed is greater than 0.9·nk, where

$$nk = 1/(2\pi) \bullet \sqrt{Cges/m} \;.$$

## Revendications

**1.** Rouleau à compensation de flèche comprenant une enveloppe de rouleau qui est montée dans la région de ses extrémités axiales sur des paliers à roulement et qui est supportée hydrauliquement parallèlement à un plan d'action, un dispositif d'amortissement (15, 16), agissant perpendiculairement au plan d'action (11), étant disposé à côté de chaque palier à roulement (4), **caractérisé en ce que** le dispositif d'amortissement (15, 16) exerce une force de base sur l'enveloppe du rouleau (2), laquelle est réalisée de manière asymétrique par rapport au plan d'action de telle sorte qu'une sollicitation unilatérale du palier à roulement se produise.

2. Rouleau à compensation de flèche selon la revendication 1, **caractérisé en ce que** le dispositif d'amortissement (15) est disposé sur le côté axialement interne du palier à roulement (4).

3. Rouleau à compensation de flèche selon la revendication 1 ou 2, **caractérisé en ce que** le dispositif d'amortissement est réalisé sous forme d'agencement à source de support hydraulique (15, 16).

4. Rouleau à compensation de flèche selon la revendication 3, **caractérisé en ce que** l'agencement à source de support hydraulique (15, 16) est précédé d'un agencement d'étranglement (21).

5. Rouleau à compensation de flèche selon la revendication 3 ou 4, **caractérisé en ce que** l'agencement à source de support hydraulique (15, 16) présente un dispositif d'alimentation (22, 23) avec un accumulateur de pression (23).

6. Rouleau à compensation de flèche selon l'une quelconque des revendications 3 à 5, **caractérisé en ce que** l'agencement à source de support hydraulique (15, 16) produit deux composants de force agissant dans des directions opposées.

7. Rouleau à compensation de flèche selon l'une quelconque des revendications 3 à 6, **caractérisé en ce que** l'agencement à source de support hydraulique (15, 16) présente des sources de support dont la hauteur de fente statique est supérieure à 25 $\mu$m.

8. Rouleau à compensation de flèche selon l'une quelconque des revendications 3 à 7, **caractérisé en ce que** l'agencement à source de support hydraulique (15, 16) présente plus de deux sources de support (15, 15a) par palier (4).

9. Rouleau à compensation de flèche selon l'une quelconque des revendications 1 à 8, **caractérisé en ce que** la vitesse de rotation de fonctionnement est supérieure à 0,9 nk, avec

$$nk = 1/(2\pi) \cdot \sqrt{Cges/m}.$$

Fig.2
A-A

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 614502 A5
- DE 19854339 A1
- DE 19833308 A1
- EP 0764790 B1
- CH 684526 A5
- EP 0772715 B1
- CH 673415 A5
- DE 29509545 U1